# EUROPÄISCHE PATENTSCHRIFT

(11) **EP 3 479 952 B1**
(45) Veröffentlichungstag und Bekanntmachung des Hinweises auf die Patenterteilung: **15.04.2020**
(21) Anmeldenummer: 18200592.6
(22) Anmeldetag: 16.10.2018
(51) Int. Cl.: B23P 11/02, H05B 6/10, H05B 6/14, H05B 6/38, H05B 6/40, H05B 6/42

(54) **SCHRUMPFFUTTERKÜHLEINRICHTUNG**
COOLING DEVICE FOR SHRINK-FIT CHUCK TOOL HOLDER
DISPOSITIF DE REFROIDISSEMENT POUR MANDRIN À RETRAIT

(30) Priorität: 03.11.2017 DE 102017125718
(43) Veröffentlichungstag der Anmeldung: 08.05.2019
(73) Patentinhaber: Haimer GmbH, 86568 Igenhausen (DE)
(72) Erfinder: Haimer, Franz, 86568 Igenhausen (DE); Leitz, Dominik, 86152 Augsburg (DE)
(74) Vertreter: Charrier Rapp & Liebau

(56) Entgegenhaltungen:
- DE-A1-102004 058 130
- DE-A1-102009 034 730
- DE-A1-102010 034 869
- DE-A1-102012 002 596
- DE-U1-202007 012 990

## Beschreibung

Die Erfindung betrifft eine Schrumpffutterkühleinrichtung nach dem Oberbegriff des Anspruchs 1.

Eine derartige Kühleinrichtung ist aus der DE 10 2012 002 596 A1 bekannt. Diese enthält einen auf ein Schrumpffutter aufsetzbaren Kühlkörper und ein mit dem Kühlkörper verbundenes Ansaugrohr, über das Luft mittels einer Absaugeinrichtung an einem Eingang einer im Kühlkopf angeordneten Durchgangsöffhung angesaugt werden kann. Bei dieser Vorrichtung wird der Kühlköper zur Kühlung nicht vollständig auf das Schrumpffutter aufgesetzt und die zur Kühlung verwendete Luft wird über einen Spalt zwischen einer unteren Stirnfläche des Kühlkopfes und dem Schrumpffutter eingesaugt. Die angesaugte Luft streicht auf ihrem Weg nach oben über den Spannbereich des Schrumpffutters und kühlt diesen ab. Der Kühleffekt wird dadurch verstärkt, dass dem Luftstrom ein flüssiges Kühlmedium zugeführt wird. Die Menge des zusätzlich zugeführten flüssigen Kühlmediums wird derart festgelegt, dass das flüssige Kühlmedium von dem Luftstrom vollständig mitgerissen wird und keine Flüssigkeit zu der Unterseite des Kühlkopfes gelangt. Dadurch kann eine besonders effektive Kühlung auch ohne aufwändige Auffangeinrichtungen erreicht werden. Das zur Kühlung verwendete flüssige Kühlmittel kann nach der Kühlung in einem Sammelbehälter aufgefangen und über eine Kühlmittelpumpe wieder dem Kühlkopf zugeführt werden. Allerdings kann bei einer derartigen Kühleinrichtung über die Absaugeinrichtung noch relativ viel von dem flüssigen Kühlmedium in die Umgebung gelangen, was zu einem unerwünschten Kühlmittelverlust führt.

Aufgabe der Erfindung ist es, eine Schrumpffutterkühleinrichtung zu schaffen, die eine effektive Kühlung mit verringertem Kühlmittelverlust ermöglicht.

Diese Aufgabe wird durch eine Schrumpffutterkühleinrichtung mit den Merkmalen des Anspruchs 1 gelöst. Zweckmäßige Weiterbildungen und vorteilhafte Ausführungsformen der Erfindung sind in den Unteransprüchen angegeben.

Bei der erfindungsgemäßen Schrumpffutterkühleinrichtung weist die Absaugeinrichtung einen Flüssigkeitsbad-Abscheider auf. Der über die Absaugeinrichtung angesaugte Kühlmittelstrom kann so durch ein Flüssigkeitsbad geleitet werden. Dadurch kann das einem Luftstrom oder einem anderen Trägergasstrom zugeführte Wasser bzw. ein anderes zusätzliches Kühlmittel auf besonders effektive Weise von dem Luft- bzw. Trägergasstrom getrennt und nahezu ohne Verluste wieder für eine erneute Verwendung bereitgestellt werden. In intensiven Versuchen hat sich gezeigt, dass der Verlust an Wasser oder einem anderen zusätzlichen Kühlmittel am geringsten ist, wenn die Absaugung durch ein Flüssigkeitsbad läuft. Außerdem kann der angesaugte Kühlmittelstrom in dem Flüssigkeitsbad-Abscheider aufbereitet, d.h. von Ölresten, Spänen oder andere Fremdkörpern befreit und beruhigt werden. Auf diese Weise kann eine besonders effektive Kühlung mit optimaler Nutzung des Kühlmittels erreicht werden.

In einer bevorzugten Ausführung enthält der Flüssigkeitsbad-Abscheider einen Flüssigkeitsbehälter mit einem unterhalb des Flüssigkeitsspiegels, beispielsweise am Boden des Flüssigkeitsbehälters mündenden Kühlmitteleinlass und einem Ansaugkanal mit einer oberhalb des Flüssigkeitsspiegels, beispielsweise an der Oberseite des Flüssigkeitsbehälters angeordneten Ansaugöffnung. Dadurch kann der über die Ansaugeinrichtung angesaugte Kühlmittelstrom in eine im Flüssigkeitsbehälter befindliche Flüssigkeit unterhalb des Flüssigkeitsspiegels eingeleitet und die Luft oberhalb des Flüssigkeitsspiegels angesaugt werden.

Um zu vermeiden, dass die im Flüssigkeitsbad-Abscheider befindliche Flüssigkeit beim Eintritt des über den Kühlmitteleinlass eingesaugten Kühlmittelstroms aufschäumt weist der Kühlmitteleinlass zweckmäßigerweise ein am Boden des Flüssigkeitsbehälters mündendes Einlassrohr und eine um das Einlassrohr angeordnete Hülse auf. Durch die Hülse kann eine zu starke Aufwirbelung der im Flüssigkeitsbad-Abscheider befindlichen Flüssigkeit vermieden und eine dadurch bedingte Schaumbildung reduziert werden.

Eine weitere Verbesserung der Abtrennung von Trägergas und zusätzlichem Kühlmittel und/oder Verunreinigungen aus dem angesaugten Kühlmittelstrom kann durch zusätzliche Trennelemente innerhalb des Flüssigkeitsbehälters erreicht werden. Bei den Trennelementen kann es sich z.B. um ein als Lochblech ausgeführtes erstes Trennelement zur Abscheidung von groben Verschmutzungen, um ein als Tropfenabscheider ausgebildetes zweites Trennelement zur Abscheidung der flüssigen Bestandteile und um ein als Prallplatte ausgeführtes drittes Trennelement zur Abschirmung der Ansaugöffhung handeln. Diese Trennelemente können einzeln, geneinsam oder in unterschiedlichen Kombinationen und Anordnungen zum Einsatz gelangen.

In einer vorteilhaften Ausgestaltung kann das als Tropfenabscheider ausgeführte zweite Trennelement als Drahtgestrick-Tropfenabscheider mit einem maschenförmigen Drahtgitter ausgeführt sein. Das zweite Trennelement kann aber auch einen anderen Aufbau aufweisen.

In einer weiteren vorteilhaften Ausführung kann in dem Flüssigkeitsbehälter eine Schmutzbarriere angeordnet sein. Dadurch kann ein Einsaugen am Boden des Flüssigkeitsbehälters abgesetzter Schmutzpartikel verhindert werden.

Die Einrichtung für die Zuführung des Kühlmittels zum Kühlkörper weist vorzugsweise mindestens eine Pumpe zum Absaugen von Flüssigkeit aus dem Flüssigkeitsbad-Abscheider auf. Zweckmäßigerweise enthält die Einrichtung außerdem mindestens einen dem Kühlkörper vorgeordneten Filter und einen Reinwasserbehälter.

Zwischen dem Reinwasserbehälter und dem Kühlkörper können in vorteilhafter Weise eine weitere Pumpe und ein Wegeventil für die Rückführung des Kühlmittels in den Flüssigkeitsbad-Abscheider über eine Rückleitung angeordnet sein. Dadurch kann eine Umwälzung der Kühlflüssigkeit erfolgen, wenn kein Schrumpffutter gekühlt wird. Damit wird der Bildung von Bakterien und Algen und dgl. entgegengewirkt.

Das dem Kühlkopf zugeführte Kühlmittel kann bevorzugt aus Wasser bestehen. Es sind aber auch flüssiges CO₂, flüssiger Stickstoff oder andere flüssige oder gasförmige Kühlmedien möglich.

Bevorzugt können ein Unterdruck und/oder Strömungsquerschnitte im Flüssigkeitsbehälter so dimensioniert sein, dass das Kühlmittel selbsttätig gekühlt wird und auf zusätzliche Kühlaggregate verzichtet werden kann.

Weitere Besonderheiten und Vorzüge der Erfindung ergeben sich aus der folgenden Beschreibung eines bevorzugten Ausführungsbeispiels anhand der Zeichnung. Es zeigen:
- **Fig. 1**: eine Schrumpffutterkühleinrichtung in einer Perspektive;
- **Fig. 2**: einen Teil der in Figur 1 gezeigten Schrumpffutterkühleinrichtung in einer zum Teil geschnittenen Seitenansicht;
- **Fig. 3**: eine Detailansicht der Schrumpffutterkühleinrichtung von Figur 2;
- **Fig. 4**: eine Detailansicht eines Kühlkörpers;
- **Fig. 5**: eine schematische Darstellung der Schrumpffutterkühleinrichtung von Figur 1;
- **Fig. 6**: eine schematische Darstellung eines Flüssigkeitsbad-Abscheiders und
- **Fig. 7**: eine schematische Darstellung einer Einrichtung für die Zuführung eines Kühlmittels.

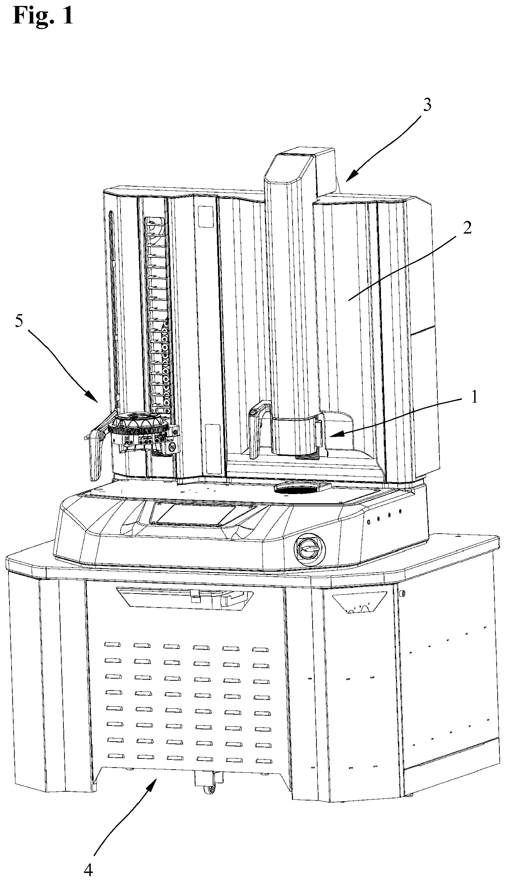

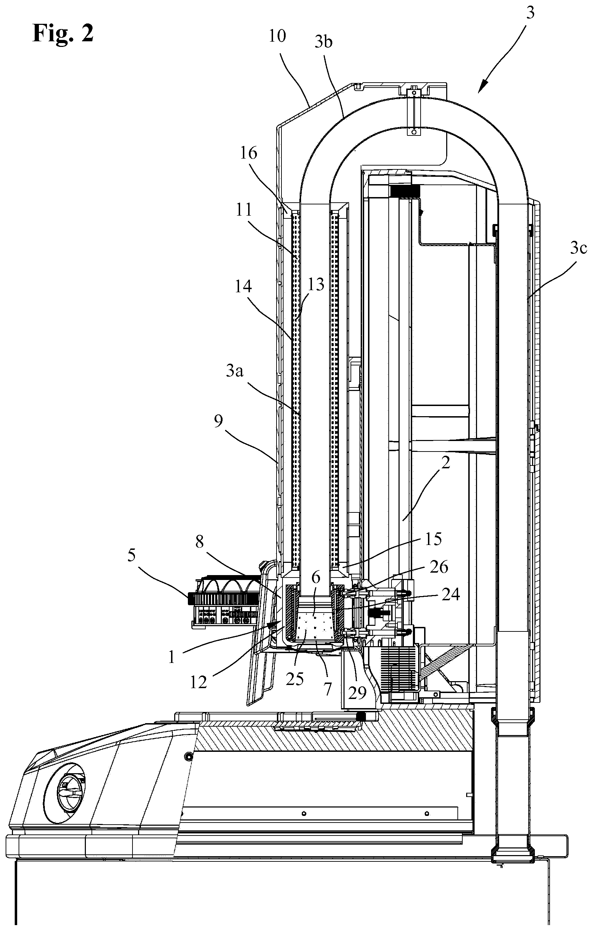

Die in Figur 1 schematisch dargestellte Schrumpffutterkühleinrichtung enthält einen zumindest auf den zu kühlenden Teil eines Schrumpffutters aufsetzbaren, glockenförmigen Kühlkörper 1, der an einem Gestell oder Ständer 2 verstellbar geführt ist. Der Kühlkörper 1 ist über ein in Figur 2 näher dargestelltes Rohrsystem 3 mit einer im Folgenden noch näher erläuterten Ansaugeinrichtung 4 verbunden. Bei der gezeigten Ausführung ist an dem Gestell bzw. Ständer 2 neben dem Kühlkörper 1 außerdem eine z.B. mit einer Induktionsspule versehene Heiz- bzw. Schrumpfeinrichtung 5 angeordnet. Dadurch kann ein Schrumpffutter an einem Gerät zum Ein- oder Ausschrumpfen eines Werkzeugs erhitzt und anschließend heruntergekühlt werden. Die Schrumpffutterkühleinrichtung kann aber auch als separates Gerät ohne Heiz- bzw. Schrumpfeinrichtung 5 ausgeführt sein.

Wie in Figur 2 gezeigt, weist die zur Verbindung des Kühlkörpers 1 mit der Ansaugeinrichtung 4 vorgesehene Rohrleitung 3 bei dem gezeigten Ausführungsbeispiel einen vom Kühlkörper 1 nach oben führenden ersten Rohrabschnitt 3a, einen gebogenen zweiten Rohrabschnitt 3b und einen nach unten führenden dritten Rohrabschnitt 3c auf. Der auf das Schrumpffutter aufsetzbare Kühlkörper 1 enthält in an sich bekannter Weise eine Durchgangsöffnung 6, deren Innenkontur so auf die Außenkontur des zu kühlenden Teils des Schrumpffutters abgestimmt ist, dass beim Aufsetzen des Kühlkörpers 1 auf das Schrumpffutter ein Spalt zwischen der Innenwand des Kühlkörpers und der Außenfläche des Schrumpffutters verbleibt. Dabei ist die Innenkontur der Durchgangsöffnung 6 so dimensioniert, dass ein großes Spektrum an Schrumpffuttern gekühlt werden kann, insbesondere was deren Durchmesser und Länge betrifft. Über die an die Ansaugeinrichtung angeschlossene Rohrleitung 3 und den Kühlkörper 1 kann so Luft an einem unteren Eingang 7 der Durchgangsöffhung 6 des Kühlkörpers 1 angesaugt und über den Spalt zwischen der Außenfläche des Schrumpffutters und der Innenfläche des Kühlkörpers 1 zu dessen Kühlung entlang geleitet werden.

Der Kühlkörper 1 und der nach oben führende erste Rohrabschnitt 3a der Rohrleitung 3 sind innerhalb eines hier aus einem unteren Gehäuseteil 8 und einem oberen Gehäuseteil 9 zusammengesetzten Gehäuses angeordnet. An der Oberseite des oberen Gehäuseteils 9 ist ein nach hinten offenes Ansaugteil 10 angeordnet, durch das die Luft aus der Umgebung eingesaugt und über eine innerhalb des Gehäuses angeordnete Kühlluftzuführung zu dem Eingang 7 der Durchgangsöffnung 6 des Kühlkörpers 1 geleitet werden kann.

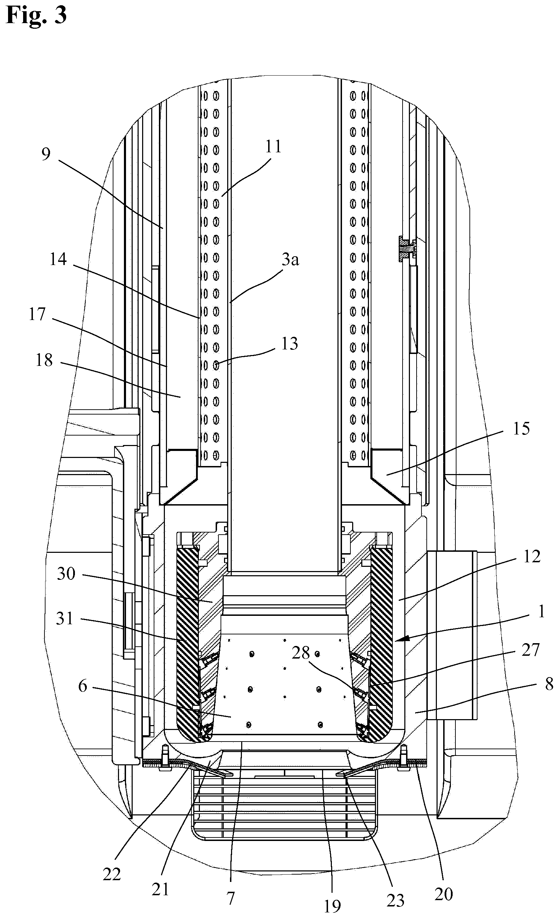

In Figur 3 ist erkennbar, dass die innerhalb des Gehäuses angeordnete Kühlluftzuführung einen zwischen dem ersten Rohrabschnitt 3a der Rohrleitung 3 und dem oberen Gehäuseteil 9 angeordneten, im Querschnitt ringförmigen Zufuhrkanal 11 und einen zwischen dem Kühlkörper 1 und dem unteren Gehäuseteil 8 gebildeten, im Querschnitt ringförmigen weiteren Zufuhrkanal 12 auf. Der zwischen dem ersten Rohrabschnitt 3a der Rohrleitung 3 und dem oberen Gehäuseteil 9 angeordnete Zufuhrkanal 11 verläuft in einem mit radialen Durchlässen 13 versehenen Gitterrohr 14, das in dem oberen Gehäuseteil 9 konzentrisch zum ersten Rohrabschnitt 3a der Rohrleitung 3 angeordnet ist. Das Gitterrohr 14 wird durch einen unteren und oberen ringförmigen Abstandshalter 15 bzw. 16 von dem ersten Rohrabschnitt 3a beabstandet in dem oberen Gehäuseteil 9 gehalten. In einem zwischen dem Gitterrohr 14 und dem oberen Gehäuseteil 9 vorhandenen Ringraum 17 ist ein Dämmkörper 18 aus Glaswolle oder einem anderen Dämmmaterial angeordnet.

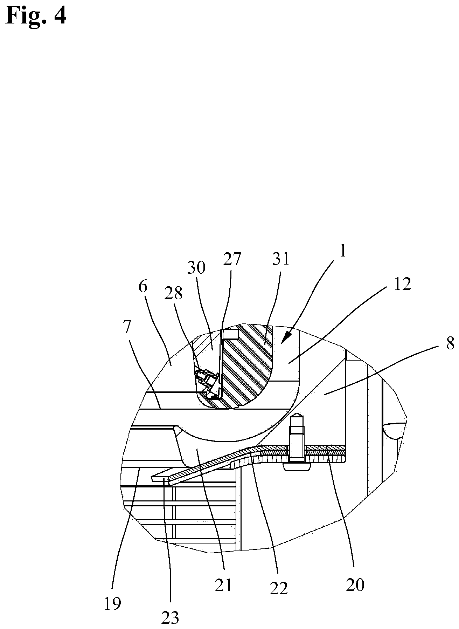

Wie auch aus Figur 4 hervorgeht, enthält das untere Gehäuseteil 8 an einer Öffnung 19 an seiner von der Stirnseite des Kühlkörpers 1 beabstandeten Unterseite 20 einen gegenüber dem runden Eingang 7 der Durchgangsöffnung 6 am Kühlkörper 1 nach innen vorstehenden Radialbund 21, über den die in dem weiteren Zufuhrkanal 12 zwischen dem Kühlkörper 1 und dem unteren Gehäuseteil 8 strömende Luft nach oben zum Eingang 7 der Durchgangsöffhung 6 am Kühlkörper 1 gelenkt wird. An der Öffnung 19 des unteren Gehäuseteils 8 ist ein Dichtelement 22 mit einer flexiblen Dichtlippe 23 zur Anlage an dem Schrumpffutter befestigt. Dadurch kann ein Spalt zwischen der Öffnung 19 und dem Schrumpffutter abgedichtet und ein unerwünschtes Ansaugen von Luft über diesen Spalt verhindert werden. Die Dichtlippe 23 besteht aus einem hitzebeständigen Material wie z. B. einem Glasfasergewebe.

Um eine besonders effektive und schnelle Kühlung zu erreichen, sind an dem Kühlkörper 1 ein in Figur 2 erkennbarer Zuführungskanal 24 und von dem Zuführungskanal 24 abzweigende, in die Durchgangsöffhung 6 mündende Zuführlöcher 25 für die Zuführung eines zusätzlichen, flüssigen oder gasförmigen Kühlmediums zu dessen Durchgangsöffhung 6 vorgesehen. Über den Zuführungskanal 24 und die Zuführlöcher 25 kann z.B. Wasser oder ein anderes flüssiges Kühlmedium in den Spalt zwischen dem Kühlkörper 1 und der Außenseite des zu kühlenden Teils des Schrumpffutters eingespritzt werden. Dadurch kann z.B. ein mit feinen Wassertröpfchen versetzter Luftstrom als Kühlmittel erzeugt werden. Die über die Ansaugeinrichtung 4 angesaugte Kühlluft kann so also mit einem zusätzlichen Kühlmedium versehen werden, so dass der Luftstrom und das ihm zugesetzte Kühlmedium einen gemeinsamen Kühlmittelstrom bilden. Vorzugsweise kann dem durch die Ansaugeinrichtung 4 angesaugten Luftstrom innerhalb des Kühlkörpers 1 Wasser als zusätzliches Kühlmittel zugeführt werden. Wasser ist kostengünstig, umweltverträglich und kann einfach gehandhabt werden. Dem Wasser können bei Bedarf aber auch korrosionshemmende Zusätze oder andere Additive, z.B. zur Verbesserung der Benetzung oder dgl. beigefügt werden. Die Menge des eingespritzten Kühlmittels wird so dosiert, dass das gesamte zusätzliche Kühlmittel über den Luftstrom mitgerissen wird. Diesen Punkt kommt eine besondere Bedeutung zu. Die Außenfläche des zu kühlenden Teils des Schrumpffutters soll nicht "begossen" werden, vielmehr soll das im Luftstrom gelöste Kühlmittel über die Oberfläche streichen. Dadurch sind insbesondere bei den mit einem flüssigen Kühlmedium versetzten Kühlmitteln keine aufwändigen Auffangeinrichtungen für das Kühlmittel unterhalb des Schrumpffutters erforderlich.

In Figur 2 ist erkennbar, dass die Zuführlöcher 25 schräg nach unten in Richtung des Eingangs 7 der Durchgangsöffhung 6 an der Unterseite des Kühlkörpers 1 ausgerichtet sind, so dass das zusätzliche Kühlmittel schräg von oben auf dem Luftstrom trifft. Über einen Anschluss 26 und eine im Folgenden noch näher erläuterte Einrichtung kann Wasser oder ein anderes zusätzliches Kühlmittel in den Zuführungskanal 24 und von dort über die Zuführlöcher 25 zu der Durchgangsöffnung 6 des Kühlkörpers 1 geleitet werden.

In dem Kühlkörper 1 ist außerdem ein in Figur 4 erkennbarer Zufuhrkanal 27 mit bevorzugt schräg nach oben gerichteten Blasluftöffnungen 28 für die Zuführung von Blasluft vorgesehen. Dadurch kann eine eventuell auf dem Schrumpffutter verbleibende Kühlflüssigkeit abgeblasen werden. An dem Kühlkörper 1 ist ein in Figur 1 gezeigter Anschluss 29 für die Zuführung von Blasluft angeordnet.

Zur einfacheren Fertigung kann der Kühlkörper 1 aus einer Innenhülse 30 und einer Außenhülse 31 zusammengesetzt sein. Der Kühlkörper 1 kann aber auch einteilig ausgeführt sein.

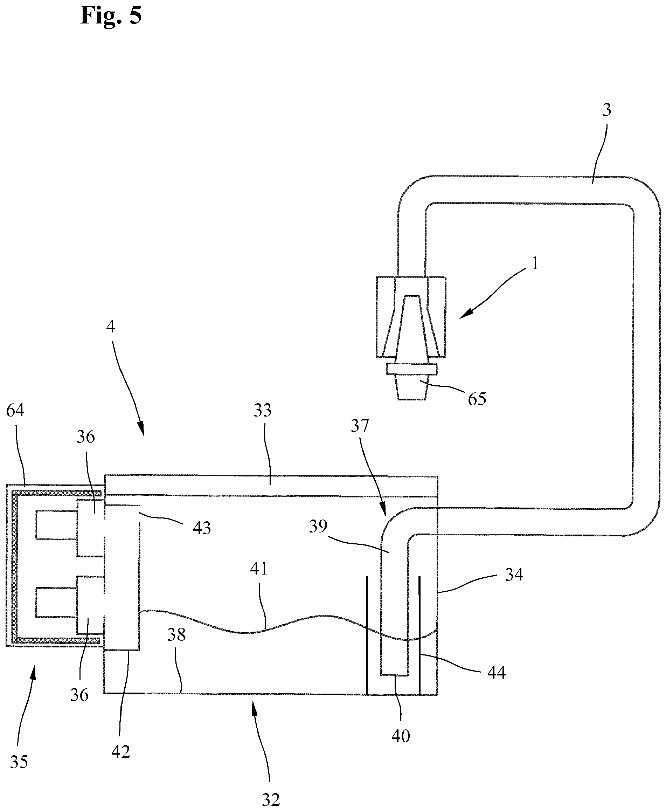

Wie aus der schematischen Darstellung von Figur 5 hervorgeht, enthält die in Figur 1 gezeigte Absaugeinrichtung 4 einen Flüssigkeitsbad-Abscheider 32 mit einem durch einen Deckel 33 nach oben dicht abgeschlossenen Flüssigkeitsbehälter 34. Die Absaugeinrichtung 4 weist außerdem ein Sauaggregat 35 mit Motoren 36 zur Erzeugung eines Unterdrucks innerhalb des Flüssigkeitsbehälters 34 auf. Das Trägergas wird aus dem Flüssigkeitsbehälter 34 angesaugt und durch eine Schalldämmeinrichtung 64 an die Umgebung abgegeben. An dem Flüssigkeitsbehälter 34 ist ein an die Rohrleitung 3 angeschlossener Kühlmitteleinlass 37 mit einem am Boden 38 des Flüssigkeitsbehälters 34 mündenden Einlassrohr 39 angeordnet. Das Einlassrohr 39 ist derart angeordnet, dass seine Mündung 40 unterhalb des Flüssigkeitsspiegels 41 einer im Flüssigkeitsbehälter 34 befindlichen Flüssigkeit liegt. Als Flüssigkeit für den Flüssigkeitsbad-Abscheider 32 kann vorzugsweise Wasser verwendet werden. An einer vom Kühlmitteleinlass 37 in idealer Weise möglichst weit entfernten Stelle des Flüssigkeitsbehälters 34 ist ein mit dem Saugaggregat 35 verbundener Ansaugkanal 42 mit einer in den Flüssigkeitsbehälter 34 mündenden Ansaugöffnung 43 vorgesehen. Die Ansaugöffnung 43 des Ansaugkanals 42 ist oberhalb des Flüssigkeitsspiegels 41 der im Flüssigkeitsbehälter 34 befindlichen Flüssigkeit angeordnet.

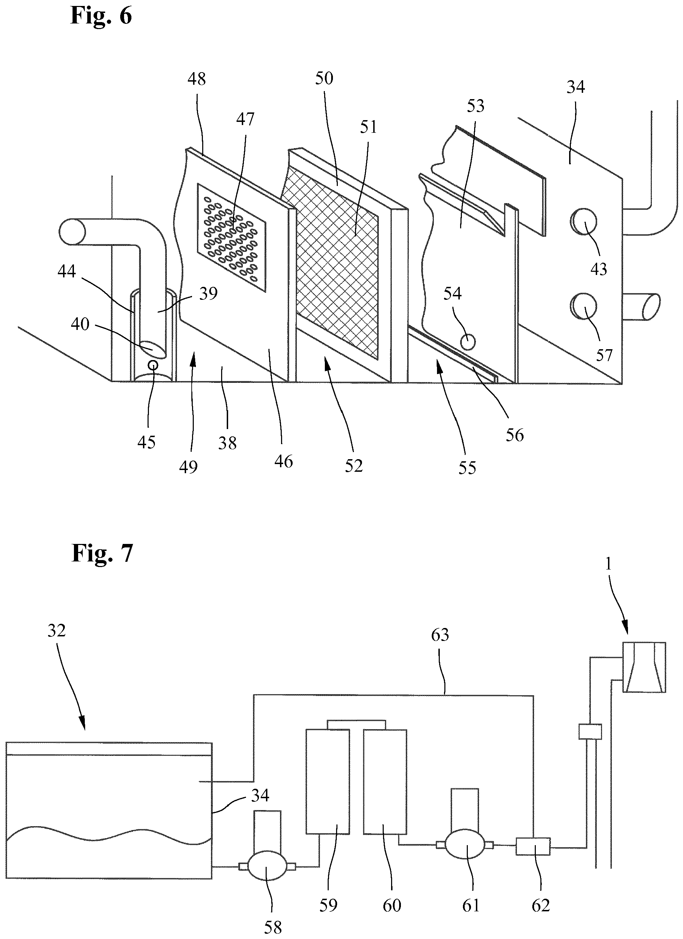

Um zu vermeiden, dass die im Flüssigkeitsbad-Abscheider 32 befindliche Flüssigkeit beim Eintritt des über das Einlassrohr 39 eingesaugten Kühlmittels aufschäumt, ragt das Einlassrohr 39 gemäß Figur 6 mit seiner vorzugsweise schräg abgeschnittenen Mündung 40 in eine am Boden 38 des Flüssigkeitsbehälters 34 angeordnete Hülse 44, die radiale Öffnungen 45 zum Eintritt der im Flüssigkeitsbehälter 34 befindlichen Flüssigkeit enthält. Durch die um das Einlassrohr 39 koaxial und von diesem beabstandet angeordnete Hülse 44 kann ein zu starkes Aufschäumen der im Flüssigkeitsbehälter 34 befindlichen Flüssigkeit vermieden werden. Zur besseren Durchmischung des Kühlmittels mit der im Flüssigkeitsbehälter 34 befindlichen Flüssigkeit kann zwischen dem Einlassrohr 39 und der Hülse 44 eine nicht dargestellte gitterähnliche Struktur z. B. in Form eines Lochbleches angeordnet sein.

Wie aus Figur 6 hervorgeht, sind in dem Flüssigkeitsbehälter 34 zusätzliche Trennelemente zur weiteren Verbesserung der Abtrennung des flüssigen Kühlmediums aus dem angesaugten Kühlmittelstrom angeordnet. Durch diese Trennelemente wird der Flüssigkeitsbehälter 34 in unterschiedliche Bereiche unterteilt. Bei der gezeigten Ausführung ist z.B. neben dem Einlassrohr 39 ein als Lochblech ausgeführtes erstes Trennelements 46 angeordnet. Durch dieses Trennelement 46 können grobe Verunreinigungen herausgefiltert werden. Außerdem dient das erste Trennelement 46 als Prallblech, um ein direktes Ansaugen des Wassers über die Motoren 36 zu verhindern. Das mit Durchgangsöffnungen 47 versehene erste Trennelement 46 steht am Boden 38 des Flüssigkeitsbehälters 34 auf und ist an seiner Oberseite über eine Dichtung 48 gegenüber dem Deckel 33 abgedichtet. Dadurch kann verhindert werden, dass die Flüssigkeit an der Unterseite des Deckels 33 entlang zur Ansaugöffnung 43 läuft und über die Ansaugeinrichtung 4 direkt angesaugt wird. Die Durchgangsöffnungen 47 sind im oberen Bereich des als Lochblech ausgeführten ersten Trennelements 46 angeordnet. Dadurch werden Schmutzablagerungen am unteren Bereich des ersten Trennelements 46 abgehalten. Der Querschnitt der Durchgangsöffhungen 47 ist größer als der Querschnitt der Motorenansaugung. Dadurch werden die im angesaugten Kühlmittel befindlichen Partikel nicht beschleunigt und es entsteht kein Spritzen des Wassers durch die Durchgangsöffnungen 47. Durch dieses erste Trennelement 46 wird innerhalb des Flüssigkeitsbehälters 34 ein als Reinigungsbereich dienender erster Bereich 49 begrenzt.

Neben dem ersten Trennelement 46 ist in dem Flüssigkeitsbehälter 34 ein als Tropfenabscheider bzw. Demister ausgebildetes zweites Trennelement 50 angeordnet. Das zweite Trennelement 50 kann z.B. als Lochblech- oder Drahtgestrick-Tropfenabscheider mit einem feineren Lochblech oder maschenförmigen Drahtgitter 51 ausgeführt sein. Beim Durchtritt des mit Wasser oder einem anderen zusätzlichen Kühlmedium versetzten Trägergasstroms durch das feinere Lochblech oder das maschenförmige Drahtgitter 51 des als Tropfenabscheider ausgebildeten zweiten Trennelements 50 wird die Strömungsrichtung des angesaugten Kühlmittelstroms mehrfach umgelenkt, so dass das mit dem Trägergas transportierte zusätzliche Kühlmedium aufgehalten wird und sich absetzt. Bei zunehmender Ablagerung der Tropfen fließen diese nach unten in den Flüssigkeitsbehälter 34. An dem zweiten Trennelement 50 setzen sich Wassertropfen und Schaum ab und werden so aus der Luft gefiltert. Zwischen den ersten Trennelement 46 und dem zweiten Trennelement 50 wird innerhalb des Flüssigkeitsbehälters 34 ein als Abscheidebereich dienender zweiter Bereich 52 begrenzt.

Weiter ist in dem Flüssigkeitsbehälter 34 ein als Prallplatte ausgebildetes drittes Trennelement 53 angeordnet. Durch ein derartiges Trennelement 53 soll die in Figur 5 gezeigte Ansaugöffnung 43 abgeschirmt und ein Ansaugen von Wasser durch die Motoren 36 verhindert werden. Das als Prallplatte ausgeführte dritte Trennelement 53 kann aus mehreren Blechen bestehen und dient als Sperre für den Schaum und als zusätzlicher Schutz gegen Wassereinsaugung an den Motoren 36. In dem dritten Trennelement 53 können am Boden Durchlässe 54 für den Wasseraustausch vorgesehen sein. Zwischen dem zweiten Trennelement 50 und dem dritten Trennelement 53 wird innerhalb des Flüssigkeitsbehälters 34 ein dritter Bereich 55 begrenzt. In dem dritten Bereich 55 ist am Boden 38 des Flüssigkeitsbehälters außerdem eine Schmutzbarriere 56 angeordnet. Durch diese Schmutzbarriere 56 kann verhindert werden, dass sich in dem als Beruhigungsbereich dienenden dritten Bereich 55 absetzende Partikel zu einer Absaugöffnung 57 und von dort zur Einrichtung für die Zuführung des Kühlmittels zum Kühlkörper 1 gelangen.

Die in Figur 7 schematisch dargestellte Einrichtung für die Zuführung des Kühlmittels zum Kühlkörper 1 weist mindestens eine Pumpe 58 zum Ansaugen der im Flüssigkeitsbehälter 34 befindlichen Flüssigkeit auf. Die Einrichtung enthält außerdem mindestens einen der Pumpe 58 nachgeordneten Filter 59 und einen dem Filter 59 nachgeordneten Reinwasserbehälter 60. Durch die Pumpe 58 kann die im Flüssigkeitsbehälter 34 befindliche Flüssigkeit an der in Figur 6 gezeigten Absaugöffnung 57 angesaugt und über den Filter 59 zu dem Reinwasserbehälter 60 geleitet werden. Zwischen dem Reinwasserbehälter 60 und dem Kühlkörper 1 ist eine weitere Pumpe 61 mit einem nachgeschalteten Wegeventil 62 angeordnet. Durch die weitere Pumpe 61 kann das im Reinwasserbehälter 60 befindliche Wasser über das Wegeventil 62 entweder zu dem Kühlkörper 1 oder über eine Rückleitung 63 in den ersten Bereich 49 des Flüssigkeitsbehälters 34 zurückgeführt werden.

Ein Kühlmittelstrom kann erst dann entstehen, wenn der Unterdruck im Flüssigkeitsbehälter 34 groß genug ist, um die Flüssigkeitssäule zwischen dem Flüssigkeitsspiegel 41 und der Mündung 40 des Einlassrohres 39 zu überwinden. Bei geeigneter Dimensionierung der Strömungsquerschnitte und der Flüssigkeitssäule und damit des Unterdruckes im Flüssigkeitsbehälter 34 sinkt die Temperatur im Flüssigkeitsbehälter 34 unterhalb der Umgebungstemperatur. Dadurch wird ein selbsttätiger Kühleffekt der Flüssigkeit bewirkt, so dass auch bei Dauerbetrieb auf zusätzliche Kühlaggregate verzichtet werden kann.

Im Folgenden wird die Funktionsweise der vorstehend beschriebenen Schrumpffutterkühleinrichtung erläutert:
Der glockenförmige Kühlkörper 1 wird so auf das in Figur 5 gezeigte Schrumpffutter 65 aufgesetzt, dass der Kühlkörper 1 mit seiner Unterseite 20 auf dem Schrumpffutter 65 oder auf einer Haltevorrichtung für das Schrumpffutter 65 aufsitzt. Dadurch kann das unkontrollierte Ansaugen von Außenluft und die damit verbundene Geräuschentwicklung vermieden werden. Diese abgedichtete Anordnung wird durch das in den Figuren 3 und 4 erkennbare zusätzliche Dichtelement 22 unterstützt. Durch das Saugaggregat 35 der Absaugeinrichtung 4 wird dann Luft an dem Ansaugteil 10 eingesaugt und über den Zufuhrkanal 11 zwischen dem Ansaugrohr 4 und dem oberen Gehäuseteil 8 sowie den weiteren Zufuhrkanal 12 zwischen dem Kühlkörper 1 und dem unteren Gehäuseteil 9 nach unten zum Eingang 7 an der Durchgangsöffnung 6 des Kühlkörpers 1 geführt. Von dort wird dann die Kühlluft durch den Spalt zwischen der Durchgangsöffhung 6 des Kühlkörpers 1 und der Außenseite des Schrumpffutters nach oben zur Rohrleitung 3 geführt.

Während des Kühlvorgangs wird durch die in Figur 7 gezeigte Pumpe 61 eine bestimmte Menge des im Reinwasserbehälter 60 befindlichen Wassers über das Wegeventil 62 zu dem Kühlkörper 1 gepumpt und wird dort von dem nach oben geführten Luftstrom mitgerissen. Der Luftstrom mit dem zugesetzten Wasser wird dann durch den über das Saugaggregat 35 innerhalb des Flüssigkeitsbehälters 35 erzeugten Unterdruck über die Rohrleitung 3 in den Flüssigkeitsbehälter 34 gesaugt. Das über die Rohrleitung angesaugte Kühlmittel wird dabei zunächst über das Einlassrohr 39 und die Hülse 44 in den Flüssigkeitsbehälter 34 geführt. Das Einlassrohr 39 und die Hülse 44 fungieren als Abscheide- und ggf. auch als Reinigungseinheit. Durch den im Flüssigkeitsbehälter 34 herrschenden Unterdruck strömt das über das Einlassrohr 39 zugeführte Kühlmittel zunächst mit hoher Geschwindigkeit gegen den Boden der Hülse 44. Festpartikel oder Partikel mit hoher Masse bleiben am Boden und trennen sich von der Luft. Die schräg abgeschnittene Mündung 40 des Einlassrohrs 39 sorgt für Wirbel zwischen dem Einlassrohr 39 und der Hülse 44. Diese Wirbel sorgen für einen zusätzlichen Abscheideeffekt an der Innenwand der Hülse 44. Zusätzlich kann die Vermischung von Luft und Flüssigkeit durch eine gitterähnliche Struktur zwischen Einlassrohr 39 und Hülse 44 verstärkt werden. Die gitterähnliche Struktur bewirkt die Bildung von kleinen Luftblasen und zu einer größeren Kontaktfläche zwischen Luft und Flüssigkeit und somit zu einer verbesserten Reinigungswirkung. Über die radialen Öffnungen 45 kann die im Flüssigkeitsbehälter 34 befindliche Flüssigkeit in die Hülse 44 einströmen. Dadurch entsteht ein zusätzlicher Wascheffekt, durch den z.B. im Kühlmittel befindliches Öl ausgewaschen werden kann.

Das in den Flüssigkeitsbehälter 34 eingeleitete Kühlmittel strömt dann durch das als Lochblech ausgeführte erste Trennelement 46, wobei erste grobe Verschmutzungen herausgefiltert werden können. Anschließend wird das Kühlmittel durch das als Tropfenabscheider ausgebildete zweite Trennelement 50 geleitet. Hier setzen sich Wassertropfen und Schaum an dem maschenförmigen Drahtgitter 51 ab und werden so aus der Luft gefiltert. Dadurch wird sichergestellt, dass kein oder fast kein vernebeltes Kühlmittel in den nachfolgenden Bereich gelangt. Nach dem zweiten Trennelement 50 gelangt das Kühlmittel in den als Beruhigungsbereich fungierenden dritten Bereich 55, in dem sich ebenfalls noch Partikel absetzen können. Das Fassungsvermögen dieses Bereichs ist vorzugsweise wesentlich, dass heißt um einen Faktor 3 oder mehr, größer als das eines anderen Bereichs.

Von dem dritten Bereich 55 kann die Flüssigkeit durch die Pumpe 58 angesaugt und über den Filter 59 zu dem Reinwasserbehälter 60 geleitet werden. Durch die im dritten Bereich 55 angeordnete Schmutzbarriere 56 kann das Einsaugen der am Boden abgesetzten Schmutzpartikel verhindert werden. Über das mit einer Prallplatte für aufspritzendes oder schäumendes Kühlmittel ausgebildete dritte Trennelement 53 wird ein Ansaugen von Flüssigkeit über die Motoren 36 des Saugaggregats 35 vermieden. Gleichzeitig stellt das Trennelement 53 auch sicher, dass der Flüssigkeitsspiegel in dem Bereich vor der Ansaugöffnung 43 und der Absaugöffhung 57 eine möglichst glatte Oberfläche bekommt, da selbst kleine Bewegungen aus dem dritten Bereich 55 weitgehend abgefangen werden.

Um einen störungsfreien Ablauf sicherzustellen, ist der Flüssigkeitsbad-Abscheider 32 in einer bevorzugten Ausführungsform so ausgestaltet, dass der Pegel des Flüssigkeitsspiegels 41 überwacht werden kann. Im einfachsten Fall geschieht dies durch zwei Detektoren, die sicherstellen, dass ein bestimmter Bereich nicht über- bzw. unterschritten wird. Dieser Bereich ist im Regelfall so bemessen, dass sichergestellt wird, dass das Kühlmittel bei Maximalpegel nicht in die Ansaugöffnung 43 gelangen kann und dass die Absaugöffnung 57 bei Minimalpegel stets vollständig mit Kühlmittel bedeckt wird. Wird dann einer dieser festgelegten Grenzwerte über- bzw. unterschritten so wird auf geeignete Art und Weise eine Fehlermeldung an den Maschinenbediener ausgegeben.

Nach dem Abschluss des Kühlvorgangs wird die Zuführung des flüssigen Kühlmittels zum Kühlkörper 1 gestoppt, um das Schrumpffutter mit dem verbleibenden Luftstrom zu trocknen. Über die Blasluftöffnungen 28 kann zusätzliche Blasluft eingeleitet werden, um das eventuell noch vorhandene flüssige Kühlmittel abzublasen. Durch Umschalten des Wegeventils 62 kann das aus dem Flüssigkeitsbehälter 34 abgesaugte flüssige Kühlmittel über die Rückleitung 63 wieder in den ersten Bereich 49 des Flüssigkeitsbehälters 34 zurückgeführt werden. Dadurch kann eine Umwälzung der Kühlflüssigkeit erreicht werden, wenn kein Schrumpffutter 65 gekühlt wird.

### Bezugszeichenliste

- 1: Kühlkörper
- 2: Ständer bzw. Gestell
- 3: Rohrleitung
- 3a: Erster Rohrabschnitt der Rohrleitung
- 3b: Zweiter Rohrabschnitt der Rohrleitung
- 3c: Dritter Rohrabschnitt der Rohrleitung
- 4: Ansaugeinrichtung
- 5: Heiz- bzw. Schrumpfeinrichtung
- 6: Durchgangsöffnung
- 7: Eingang
- 8: Unteres Gehäuseteil
- 9: Oberes Gehäuseteil
- 10: Ansaugteil
- 11: Zufuhrkanal
- 12: Weiterer Zufuhrkanal
- 13: Durchlass
- 14: Gitterrohr
- 15: Unterer Abstandshalter
- 16: Oberer Abstandshalter
- 17: Ringraum
- 18: Dämmkörper
- 19: Öffnung
- 20: Unterseite
- 21: Radialbund
- 22: Dichtelement
- 23: Dichtlippe
- 24: Zuführungskanal
- 25: Zufuhrloch
- 26: Anschluss
- 27: Zufuhrkanal
- 28: Blasluftöffnung
- 29: Anschluss
- 30: Innenhülse
- 31: Außenhülse
- 32: Flüssigkeitsbad-Abscheider
- 33: Deckel
- 34: Flüssigkeitsbehälter
- 35: Saugaggregat
- 36: Motor
- 37: Kühlmitteleinlass
- 38: Boden
- 39: Einlassrohr
- 40: Mündung
- 41: Flüssigkeitsspiegel
- 42: Ansaugkanal
- 43: Ansaugöffnung
- 44: Hülse
- 45: Öffnungen
- 46: Erstes Trennelement
- 47: Durchgangsöffnung
- 48: Dichtung
- 49: Erster Bereich
- 50: Zweites Trennelement
- 51: Drahtgitter
- 52: Zweiter Bereich
- 53: Drittes Trennelement
- 54: Durchlass
- 55: Dritter Bereich
- 56: Schmutzbarriere
- 57: Absaugöffnung
- 58: Pumpe
- 59: Filter
- 60: Reinwasserbehälter
- 61: Pumpe
- 62: Wegeventil
- 63: Rückleitung
- 64: Schalldämmeinrichtung
- 65: Schrumpffutter

## Patentansprüche

1. Schrumpffutterkühleinrichtung mit einem auf ein Schrumpffutter (66) aufsetzbaren Kühlkörper (1), einer Einrichtung (58, 59, 60) für die Zuführung eines Kühlmittels zum Kühlkörper (1) und einer mit dem Kühlkörper (1) verbundenen Absaugeinrichtung (4), **dadurch gekennzeichnet, dass** die Absaugeinrichtung (4) einen Flüssigkeitsbad-Abscheider (32) enthält.

2. Schrumpffutterkühleinrichtung nach Anspruch 1, **dadurch gekennzeichnet, dass** der Flüssigkeitsbad-Abscheider (32) einen Flüssigkeitsbehälter (34) mit einem unterhalb des Flüssigkeitsspiegels (41) mündenden Kühlmitteleinlass (37) und einen Ansaugkanal (42) mit einer oberhalb des Flüssigkeitsspiegels (41) angeordneten Ansaugöffnung (43) enthält.

3. Schrumpffutterkühleinrichtung nach Anspruch 2, **dadurch gekennzeichnet, dass** der Kühlmitteleinlass (37) ein am Boden (38) des Flüssigkeitsbehälters (34) mündendes Einlassrohr (39) und eine um das Einlassrohr (37) angeordnete Hülse (44) umfasst.

4. Schrumpffutterkühleinrichtung nach Anspruch 2 oder 3, **dadurch gekennzeichnet, dass** der Flüssigkeitsbehälter (34) durch ein oder mehrere Trennelemente (46, 50, 53) in unterschiedliche Bereiche (49, 52, 55) unterteilt wird.

5. Schrumpffutterkühleinrichtung nach Anspruch 4, **dadurch gekennzeichnet, dass** in dem Flüssigkeitsbehälter (34) ein als Lochblech ausgebildetes erstes Trennelement (46) angeordnet ist.

6. Schrumpffutterkühleinrichtung nach Anspruch 4 oder 5, **dadurch gekennzeichnet, dass** in dem Flüssigkeitsbehälter (34) ein als Tropfenabscheider ausgebildetes zweites Trennelement (50) angeordnet ist.

7. Schrumpffutterkühleinrichtung nach Anspruch 6, **dadurch gekennzeichnet, dass** das zweite Trennelement (50) als Drahtgestrick-Tropfenabscheider mit einem maschenförmigen Drahtgitter (51) ausgeführt ist.

8. Schrumpffutterkühleinrichtung nach einem der Ansprüche 4 bis 7, **dadurch gekennzeichnet, dass** in dem Flüssigkeitsbehälter (34) ein als Prallblech ausgebildetes drittes Trennelement (53) angeordnet ist.

9. Schrumpffutterkühleinrichtung nach einem der Ansprüche 2 bis 8, **dadurch gekennzeichnet, dass** in dem Flüssigkeitsbehälter (34) eine Schmutzbarriere (56) angeordnet ist.

10. Schrumpffutterkühleinrichtung nach einem der Ansprüche 2 bis 9, **dadurch gekennzeichnet, dass** die Ansaugeinrichtung (4) ein Ansaugaggregat (35) zur Erzeugung eines Unterdrucks in dem durch einen Deckel (33) nach oben dicht abgeschlossenen Flüssigkeitsbehälter (34) enthält.

11. Schrumpffutterkühleinrichtung nach einem der Ansprüche 1 bis 10, **dadurch gekennzeichnet, dass** die Einrichtung (58, 59, 60) für die Zuführung des Kühlmittels zum Kühlkörper (1) mindestens eine Pumpe (58) zum Absaugen von Flüssigkeit aus dem Flüssigkeitsbad-Abscheider (32) enthält.

12. Schrumpffutterkühleinrichtung nach einem der Ansprüche 1 bis 11, **dadurch gekennzeichnet, dass** die Einrichtung (58, 59, 60) für die Zuführung des Kühlmittels zum Kühlkörper (1) mindestens einen dem Kühlkörper (1) vorgeordneten Filter (59) enthält.

13. Schrumpffutterkühleinrichtung nach einem der Ansprüche 1 bis 12, **dadurch gekennzeichnet, dass** die Einrichtung (58, 59, 60) für die Zuführung des Kühlmittels einen Reinwasserbehälter (60) umfasst.

14. Schrumpffutterkühleinrichtung nach Anspruch 13, **dadurch gekennzeichnet, dass** zwischen dem Reinwasserbehälter (60) und dem Kühlkörper (1) eine weitere Pumpe (61) und ein Wegeventil (62) für die Rückführung des Kühlmittels in den Flüssigkeitsbad-Abscheider (32) über eine Rückleitung (63) angeordnet sind.

15. Schrumpffutterkühleinrichtung nach einem der Ansprüche 1 bis 14, **dadurch gekennzeichnet, dass** der Kühlkörper (1) einen Zuführungskanal (24) und von dem Zuführungskanal (24) abzweigende, in eine Durchgangsöffhung (6) des Kühlkörpers (1) mündende Zufuhrlöcher (25) enthält.

16. Schrumpffutterkühleinrichtung nach einem der Ansprüche 1 bis 15, **dadurch gekennzeichnet, dass** der Kühlkörper (1) eine durch eine Schalldämmeinrichtung (14, 18) zumindest teilweise gedämmte Kühlluftzuführung (11, 12) für die Zufuhr von Luft zum Eingang (7) einer Durchgangsöffhung (6) im Kühlkörper (1) enthält.

17. Schrumpffutterkühleinrichtung nach einem der Ansprüche 2 bis 16, **dadurch gekennzeichnet, dass** der Unterdruck und die Strömungsquerschnitte im Flüssigkeitsbehälter (34) so dimensioniert sind, dass das Kühlmittel selbsttätig gekühlt wird und auf zusätzliche Kühlaggregate verzichtet werden kann.

## Claims

1. Shrink chuck cooling installation having a cooling member (1) which is capable of being placed onto a shrink chuck (66), an installation (58, 59, 60) for the supply of a coolant to the cooling member (1), and a suction installation (4) which is connected to the cooling member (1), **characterized in that** the suction installation (4) contains a liquid-bath separator (32).

2. Shrink chuck cooling installation according to Claim 1, **characterized in that** the liquid-bath separator (32) contains a liquid-bath container (34) having a coolant inlet (37) which opens out below the liquid level (41), and an intake duct (42) having an intake opening (43) which is disposed above the liquid level (41).

3. Shrink chuck cooling installation according to Claim 2, **characterized in that** the coolant inlet (37) comprises an inlet pipe (39) which opens out at the base (38) of the liquid container (34), and a sleeve (44) which is disposed about the inlet pipe (37).

4. Shrink chuck cooling installation according to Claim 2 or 3, **characterized in that** the liquid container (34) by one or a plurality of separation elements (46, 50, 53) is subdivided into different regions (49, 52, 55).

5. Shrink chuck cooling installation according to Claim 4, **characterized in that** a first separation element (46) which is configured as a perforated plate is disposed in the liquid container (34).

6. Shrink chuck cooling installation according to Claim 4 or 5, **characterized in that** a second separation element (50) which is configured as a droplet separator is disposed in the liquid container (34).

7. Shrink chuck cooling installation according to Claim 6, **characterized in that** the second separation element (50) is embodied as a knitted-wire droplet separator having a mesh-shaped wire netting (51).

8. Shrink chuck cooling installation according to one of Claims 4 to 7, **characterized in that** a third separation element (53) which is configured as an impact plate is disposed in the liquid container (34) .

9. Shrink chuck cooling installation according to one of Claims 2 to 8, **characterized in that** a dirt barrier (56) is disposed in the liquid container (34) .

10. Shrink chuck cooling installation according to one of Claims 2 to 9, **characterized in that** the intake installation (4) for generating a vacuum in the liquid container (34) which is tightly closed towards the top by a lid (33) contains an intake apparatus (35).

11. Shrink chuck cooling installation according to one of Claims 1 to 10, **characterized in that** the installation (58, 59, 60) for the supply of the coolant to the cooling member (1) contains at least one pump (58) for suctioning liquid from the liquid-bath separator (32).

12. Shrink chuck cooling installation according to one of Claims 1 to 11, **characterized in that** the installation (58, 59, 60) for the supply of the coolant to the cooling member (1) contains at least one filter (59) which is disposed upstream of the cooling member (1).

13. Shrink chuck cooling installation according to one of Claims 1 to 12, **characterized in that** the installation (58, 59, 60) for the supply of the coolant comprises a clean water container (60).

14. Shrink chuck cooling installation according to Claim 13, **characterized in that** a further pump (61) and a directional valve (62) for the return of the coolant into the liquid-bath separator (32) by way of a return line (63) are disposed between the clean water container (60) and the cooling member (1).

15. Shrink chuck cooling installation according to one of Claims 1 to 14, **characterized in that** the cooling member (1) contains a supply duct (24) and supply bores (25) which branch off from the supply duct (24) and open out into a through opening (6) of the cooling member (1).

16. Shrink chuck cooling installation according to one of Claims 1 to 15, **characterized in that** the cooling member (1) for the supply of air to the entry (7) of a through opening (6) in the cooling member (1) contains a cooling-air supply (11, 12) which is at least partially muffled by a muffler installation (14, 18).

17. Shrink chuck cooling installation according to one of Claims 2 to 16, **characterized in that** the vacuum and the flow cross sections in the liquid container (34) are dimensioned such that the coolant is cooled in a self-acting manner and additional cooling apparatuses can be dispensed with.

## Revendications

1. Dispositif de refroidissement pour mandrin à ajustement fretté comprenant un dissipateur thermique (1) pouvant être placé sur un mandrin à ajustement fretté (66), un dispositif (58, 59, 60) pour acheminer un réfrigérant au dissipateur thermique (1) et un dispositif d'aspiration (4) connecté au dissipateur thermique (1), **caractérisé en ce que** le dispositif d'aspiration (4) contient un séparateur à bain liquide (32).

2. Dispositif de refroidissement pour mandrin à ajustement fretté selon la revendication 1, **caractérisé en ce que** le séparateur à bain liquide (32) contient un récipient de liquide (34) avec une entrée de réfrigérant (37) débouchant en dessous du niveau de liquide (41) et un canal d'aspiration (42) avec une ouverture d'aspiration (43) disposée au-dessus du niveau de liquide (41).

3. Dispositif de refroidissement pour mandrin à ajustement fretté selon la revendication 2, **caractérisé en ce que** l'entrée de réfrigérant (37) comprend un tube d'entrée (39) débouchant au fond (38) du récipient de liquide (34) et un manchon (44) disposé autour du tube d'entrée (37).

4. Dispositif de refroidissement pour mandrin à ajustement fretté selon la revendication 2 ou 3, **caractérisé en ce que** le récipient de liquide (34) est divisé par un ou plusieurs éléments de séparation (46, 50, 53) en différentes zones (49, 52, 55).

5. Dispositif de refroidissement pour mandrin à ajustement fretté selon la revendication 4, **caractérisé en ce qu'**un premier élément de séparation (46) réalisé sous forme de tôle perforée est disposé dans le récipient de liquide (34).

6. Dispositif de refroidissement pour mandrin à ajustement fretté selon la revendication 4 ou 5, **caractérisé en ce qu'**un deuxième élément de séparation (50) réalisé sous forme de séparateur de gouttes est disposé dans le récipient de liquide (34) .

7. Dispositif de refroidissement pour mandrin à ajustement fretté selon la revendication 6, **caractérisé en ce que** le deuxième élément de séparation (50) est réalisé sous forme de séparateur de gouttes à fil métallique tricoté avec un treillis métallique en forme de mailles (51).

8. Dispositif de refroidissement pour mandrin à ajustement fretté selon l'une quelconque des revendications 4 à 7, **caractérisé en ce qu'**un troisième élément de séparation (53) réalisé sous forme de tôle d'impact est disposé dans le récipient de liquide (34).

9. Dispositif de refroidissement pour mandrin à ajustement fretté selon l'une quelconque des revendications 2 à 8, **caractérisé en ce qu'**une barrière de poussière (56) est disposée dans le récipient de liquide (34).

10. Dispositif de refroidissement pour mandrin à ajustement fretté selon l'une quelconque des revendications 2 à 9, **caractérisé en ce que** le dispositif d'aspiration (4) contient un système d'aspiration (35) pour générer une dépression dans le récipient de liquide (34) fermé hermétiquement vers le haut par un couvercle (33).

11. Dispositif de refroidissement pour mandrin à ajustement fretté selon l'une quelconque des revendications 1 à 10, **caractérisé en ce que** le dispositif (58, 59, 60) pour acheminer le réfrigérant au dissipateur de chaleur (1) contient au moins une pompe (58) pour aspirer le liquide hors du séparateur à bain liquide (32).

12. Dispositif de refroidissement pour mandrin à ajustement fretté selon l'une quelconque des revendications 1 à 11, **caractérisé en ce que** le dispositif (58, 59, 60) pour acheminer le réfrigérant au dissipateur thermique (1) contient au moins un filtre (59) monté en amont du dissipateur thermique (1).

13. Dispositif de refroidissement pour mandrin à ajustement fretté selon l'une quelconque des revendications 1 à 12, **caractérisé en ce que** le dispositif (58, 59, 60) pour acheminer le réfrigérant comprend un récipient d'eau pure (60).

14. Dispositif de refroidissement pour mandrin à ajustement fretté selon la revendication 13, **caractérisé en ce qu'**entre le récipient d'eau pure (60) et le dissipateur de chaleur (1) sont disposées une pompe supplémentaire (61) et une soupape à tiroir (62) pour faire recirculer le réfrigérant dans le séparateur à bain liquide (32) par le biais d'une conduite de retour (63).

15. Dispositif de refroidissement pour mandrin à ajustement fretté selon l'une quelconque des revendications 1 à 14, **caractérisé en ce que** le dissipateur thermique (1) contient un canal d'alimentation (24) et des trous d'alimentation (25) partant du canal d'alimentation (24), débouchant dans une ouverture de passage (6) du dissipateur thermique (1).

16. Dispositif de refroidissement pour mandrin à ajustement fretté selon l'une quelconque des revendications 1 à 15, **caractérisé en ce que** le dissipateur thermique (1) contient une alimentation en air de refroidissement (11, 12) au moins en partie atténuée par un dispositif d'atténuation des sons (14, 18) pour l'alimentation en air à l'entrée (7) d'une ouverture de passage (6) dans le dissipateur thermique (1).

17. Dispositif de refroidissement pour mandrin à ajustement fretté selon l'une quelconque des revendications 2 à 16, **caractérisé en ce que** la dépression et les sections transversales d'écoulement dans le récipient de liquide (34) sont conçues de telle sorte que le réfrigérant puisse être refroidi automatiquement et que l'on puisse se passer de groupes de refroidissement supplémentaires.
